# EUROPÄISCHE PATENTSCHRIFT

(11) **EP 2 617 101 B1**
(45) Veröffentlichungstag und Bekanntmachung des Hinweises auf die Patenterteilung: **07.06.2017**
(21) Anmeldenummer: 11743223.7
(22) Anmeldetag: 27.07.2011
(51) Int. Cl.: H01Q 1/32, H01Q 13/20, H01Q 21/00, G01S 13/93, G01S 7/03

(54) **GRUPPENANTENNE FÜR RADARSENSOREN**
ARRAY ANTENNA FOR RADAR SENSORS
ANTENNE RÉSEAU POUR CAPTEURS RADAR

(30) Priorität: 15.09.2010 DE 102010040793
(43) Veröffentlichungstag der Anmeldung: 24.07.2013
(73) Patentinhaber: Robert Bosch GmbH, 70442 Stuttgart (DE)
(72) Erfinder: BINZER, Thomas, 70565 Stuttgart (DE); WALDSCHMIDT, Christian, 70197 Stuttgart (DE); HELLINGER, Raphael, 71299 Wimsheim (DE); HANSEN, Thomas, 31139 Hildesheim (DE)
(86) Internationale Anmeldenummer: PCT/EP2011/062863
(87) Internationale Veröffentlichungsnummer: WO 2012/034763

(56) Entgegenhaltungen:
- EP-A1- 1 058 339
- WO-A2-2006/130795
- DE-A1- 2 606 271
- JP-A- 8 023 223
- US-A- 5 422 649
- US-A1- 2010 026 584
- US-B1- 6 181 291

## Beschreibung

### Stand der Technik

Die Erfindung betrifft eine Gruppenantenne für Radarsensoren, mit einer Speiseleitung, die mit einem Ende an einen Oszillator angeschlossen ist, mehreren Antennenelementen, die jeweils über eine Zuleitung mit der Speiseleitung verbunden sind, und mit Schaltungselementen zur Leistungsaufteilung auf die Antennenelemente, wobei die Schaltungselemente zur Leistungsaufteilung ausschließlich in den von der Speiseleitung abzweigenden Zuleitungen angeordnet sind, die Speiseleitung am dem Oszillator entgegengesetzten Ende reflektierend ausgebildet ist und die Abstände zwischen den Abzweigungen der Zuleitungen und der Abstand zwischen der letzten dieser Abzweigungen und dem reflektierenden Ende der Speiseleitung so gewählt sind, dass die am reflektierenden Ende reflektierte Welle bei der Überlagerung mit der hinlaufenden Welle eine stehende Welle bildet. Insbesondere befasst sich die Erfindung mit einer Gruppenantenne für Radarsensoren, die in Kraftfahrzeugen in Verbindung mit Fahrerassistenzsystemen eingesetzt werden, beispielsweise zur Ortung vorausfahrender Fahrzeuge in einem automatischen Abstandsregelsystem (ACC; Adaptive Cruise Control). Diese Radarsensoren arbeiten typischerweise mit einer Frequenz von 24 GHz oder 77 GHz.

Planare Antennen in Mikrostreifentechnologie haben bei diesen Anwendungen den Vorteil, dass sie verhältnismäßig kostengünstig herstellbar sind und eine flache Bauweise ermöglichen und dass keine Übergänge zwischen verschiedenen Leitungssystemen oder Leitungstypen erforderlich sind. Die Antennenelemente können wie die übrigen Schaltungskomponenten einfach durch entsprechende Mikrostreifenleiter auf einer Platine gebildet werden.

Bei einer Gruppenantenne, auch als Antennen-Array bezeichnet, wird die abzustrahlende Leistung so in die verschiedenen Antennenelemente eingespeist, dass sich durch Überlagerung und Interferenz der von den verschiedenen Antennenelementen emittierten Strahlung eine gewünschte Richtcharakteristik ergibt. Dazu müssen die Leistungen und Phasen der in die einzelnen Antennenelemente eingeleiteten Mikrowellen geeignet abgestimmt werden. In der Regel ist eine Richtcharakteristik mit einer schmalen Hauptkeule und weitgehend unterdrückten Nebenkeulen erwünscht. Da jedoch für den Radarsensor und damit auch für die Antennen nur ein begrenzter Raum zur Verfügung steht, lässt sich eine vollständige Unterdrückung der Nebenkeulen zumeist nicht erreichen.

Bei einer herkömmlichen Gruppenantenne der eingangs genannten Art zweigen die Zuleitungen zu den einzelnen Antennenelementen von der Speiseleitung ab, und an den Abzweigungen sind in der Speiseleitung sogenannte Transformatoren vorgesehen, die durch eine geeignete Transformation von Leitungsimpedanzen die gewünschte Leistungsaufteilung auf die Antennenelemente bewirken. Bei Antennen in Mikrostreifentechnologie werden die Transformatoren typischerweise durch Leitungsabschnitte mit unterschiedlicher Breite und mit einer Länge gebildet, die einem Viertel der Wellenlänge der Mikrowellen auf der Leitung entspricht.

Die Transformatoren in der Speiseleitung stellen jedoch Störstellen dar, die zu unerwünschten Abstrahlungen und Reflexionen führen. Das schränkt nicht nur die Möglichkeiten zur Unterdrückung von Nebenkeulen ein, sondern erschwert auch die Unterdrückung von Kreuzpolarisationen, die beispielsweise zur Vermeidung von Störungen durch andere Systeme häufig erwünscht ist. Normalerweise weist die von dem Radarsensor emittierte und empfangene Strahlung eine bestimmte Polarisation, beispielsweise eine lineare Polarisation in einer bestimmten Richtung auf. Unter Kreuzpolarisation versteht man eine Strahlungskomponente mit einer dazu orthogonalen Polarisation.

Aufgrund von Einschränkungen bei der Gestaltung der Verzweigungen gelingt es zumeist auch nicht, die insgesamt über die Speiseleitung zugeführte Leistung vollständig auf die Antennenelemente aufzuteilen und über die Antennenelemente abzustrahlen.

Zumeist verbleibt überschüssige Leistung auf der Speiseleitung und muss am Ende dieser Speiseleitung entweder abgestrahlt oder vernichtet werden. Die Abstrahlung der unerwünschten Leistung führt jedoch wieder zu ausgeprägteren Nebenkeulen. Eine Vernichtung der überschüssigen Leistung mit Hilfe spezieller Absorber hat den Nachteil, dass die Absorber zusätzliche Kosten verursachen und zusätzlichen Platz benötigen. Außerdem hat diese Lösung den Nachteil, das insgesamt höhere Leistungsverluste auftreten.

Eine Gruppenantenne nach dem Oberbegriff des Anspruchs 1 ist aus DE 26 06 271 A1 bekannt.

US 6 181 291 B1 beschreibt eine Gruppenantenne, bei der ein Ende der Speiseleitung reflektierend ausgebildet ist.

### Offenbarung der Erfindung

Aufgabe der Erfindung ist es, eine Gruppenantenne für Radarsensoren zu schaffen, die verlustarm arbeitet und eine wirksame Unterdrückung von Nebenkeulen ermöglicht.

Diese Aufgabe wird erfindungsgemäß dadurch gelöst, dass die Schwingungsbäuche der stehenden Welle sich jeweils an den Abzweigungsstellen der Zuleitungen befinden, und dass mindestens eines der Schaltungselemente zur Leistungsaufteilung durch eine Zuleitung in der Form einer Streifenleitung gebildet wird, die nur kapazitiv an die Speiseleitung gekoppelt ist.

Bei der erfindungsgemäßen Gruppenantenne wird die überschüssige Leistung am Ende der Speiseleitung nicht abgestrahlt, was zu unerwünschten Nebenkeulen führen würde, und auch nicht mit Absorbern vernichtet, was zu unerwünschten Verlusten führen würde, sondern sie wird vielmehr reflektiert und dadurch erneut in die Antennenelemente eingeleitet, so dass sie über diese mit der gewünschten Richtcharakteristik abgestrahlt werden kann. Außerdem sind erfindungsgemäß die Schaltungselemente , die zur Leistungsaufteilung dienen, nicht in der Speiseleitung angeordnet, sondern vielmehr in den Zuleitungen zu den einzelnen Antennenelementen. Das hat den Vorteil, dass der Effekt, der durch diese Schaltungselemente bewirkt wird, unabhängig von der Ausbreitungsrichtung der Mikrowellen in der Speiseleitung ist. Mit Schaltungselementen dieser Art lässt sich die in das Antennenelement übertragene Leistung begrenzen, was insbesondere bei den endständigen Antennenelementen einer Gruppenantenne häufig erwünscht ist. Das Fehlen von Transformatoren und vergleichbaren Schaltungskomponenten in der Speiseleitung erleichtert darüber hinaus die Unterdrückung von Kreuzpolarisationen.

Vorteilhafte Ausgestaltungen und Weiterbildungen der Erfindung sind in den Unteransprüchen angegeben.

Die Reflexion der Mikrowellen am Ende der Speiseleitung kann durch ein offenes Ende oder ein geschlossenes (kurzgeschlossenes) Ende der Speiseleitung oder auch durch einen geeigneten Abschluss erreicht werden.

Im folgenden werden Ausführungsbeispiele anhand der Zeichnung näher erläutert.

Es zeigen:
- Fig. 1: eine Gruppenantenne mit vier in einer Reihe angeordneten Antennenelementen;
- Fig. 2 bis 4: Ausführungsbeispiele für unterschiedlich gestaltete Schaltungselemente zur Leistungsaufteilung auf die Antennenelemente, wobei Fig. 4 ein Ausführungsbeispiel der Erfindung zeigt; und
- Fig. 5 und 6: alternative Ausführungsformen eines reflektierenden Endes einer Speiseleitung.

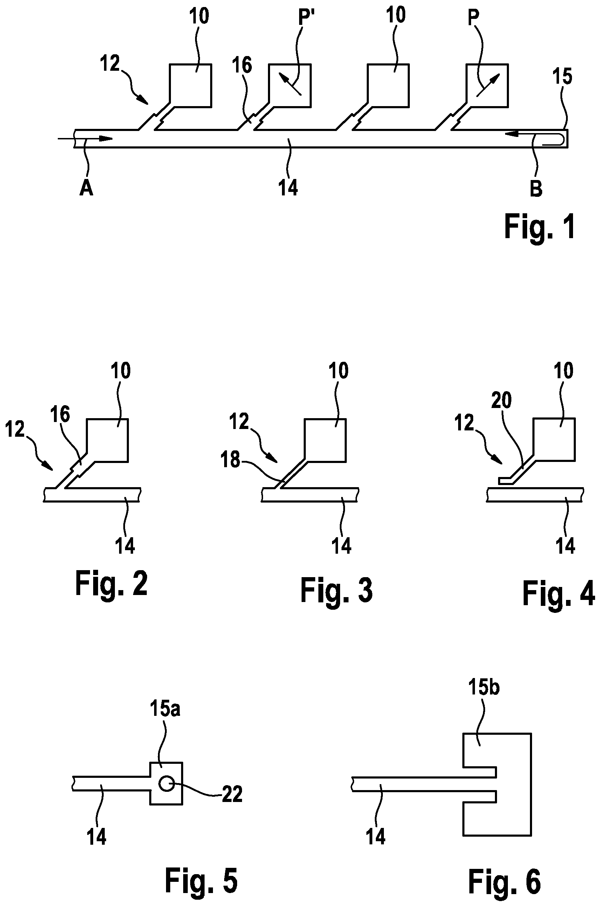

Die in Fig. 1 gezeigte Gruppenantenne ist beispielsweise in Mikrostreifentechnik auf einer Leiterplatte ausgebildet und weist vier in einer Reihe (oder Spalte) angeordnete quadratische Antennenelemente 10 auf, die jeweils über eine Zuleitung 12 mit einer gemeinsamen Speiseleitung 14 verbunden sind, über die sie mit Mikrowellenleistung versorgt werden.

Die Mikrowellenleistung wird von einem nicht gezeigten Oszillator erzeugt und breitet sich in der in Fig. 1 durch einen Pfeil A angegebenen Richtung in der Speiseleitung 14 aus und tritt dann über die Zuleitungen 12 in die Antennenelemente 10 aus, von denen sie abgestrahlt wird. Der Empfang von Mikrowellenstrahlung verläuft entsprechend in umgekehrter Richtung.

Jede Zuleitung 12 enthält in dem in Fig. 1 gezeigten Beispiel einen Transformator 16, der sicherstellt, dass dem zugehörigen Antennenelement 10 die richtige Menge an Leistung in der richtigen Phasenlage zugeführt wird. Der Transformator wird jeweils durch einen verbreiterten Leitungsabschnitt gebildet, dessen Länge einem Viertel der Wellenlänge der Mikrowellenstrahlung entspricht.

Das Ende 15 der Speiseleitung 14 ist in Fig. 1 als offenes Ende ausgebildet, an dem die Mikrowellenstrahlung reflektiert wird, wie durch einen Pfeil B symbolisiert wird. Die Abstände zwischen den Abzweigungen der Zuleitungen 12 für die einzelnen Antennenelemente 10 und der Abstand zwischen der letzten dieser Abzweigungen und dem offenen Ende 15 der Speiseleitung 14 sind beispielsweise so gewählt, dass die am offenen Ende reflektierte Welle bei der Überlagerung mit der hinlaufenden Welle (Pfeil A) eine stehende Welle bildet, deren Schwingungsbäuche sich jeweils an den Abzweigungsstellen der Zuleitungen befinden. Auf diese Weise lässt sich erreichen, dass die zugeführte Leistung praktisch vollständig über die Antennenelemente 10 abgestrahlt und weder vernichtet noch über irgendwelche andere Elemente abgestrahlt wird, die zu stärkeren Nebenkeulen beitragen könnten. Die Transformatoren 16 haben auf die reflektierte Welle den gleichen Effekt wie auf die hinlaufende Welle, so dass sie die Amplitude und Phase der Mikrowellenstrahlung für beide Laufrichtungen in der gewünschten Weise beeinflussen. Da sich die Transformatoren 16 nicht in der Speiseleitung 14 befinden, bilden sie in dieser Speiseleitung auch keine Störstellen, die zu unerwünschten Reflexionen führen können. Dadurch wird zugleich eine weitgehende Entkopplung von Kreuzpolarisationen erleichtert.

Im gezeigten Beispiel sind die Antennenelemente 10 quadratisch, und die Zuleitung 12 tritt jeweils an einer Ecke in das Antennenelement ein. Die emittierte Mikrowellenstrahlung hat daher eine lineare Polarisation P, die in Fig. 1 bei dem äußersten rechten Antennenelement durch einen Pfeil angegeben ist. Die Anregung von Kreuzpolarisationen mit der dazu rechtwinkligen Polarisationsrichtung P' wird bei der erfindungsgemäßen Gruppenantenne weitgehend vermieden.

Die Zuleitungen 12 können auch anders gestaltet sein als in Fig. 1. Dies wird in Fig. 2 bis 4 an Beispielen illustriert.

Während in Fig. 1 der Transformator 16 sich jeweils an dem Ende der Zuleitung 12 befindet, das von der Speiseleitung 14 abzweigt, ist in Fig. 2 ein Beispiel gezeigt, bei dem der Transformator 16 unmittelbar an das Antennenelement 10 angrenzt.

Fig. 3 zeigt ein Beispiel, bei dem die Zuleitung 12 keinen Transformator enthält, sondern insgesamt durch eine Mikrostreifenleitung 18 mit geringerer Breite gebildet wird. Dadurch lässt sich die in das zugehörige Antennenelement 10 eingekoppelte Leistung drosseln, wie es häufig für Antennenelemente am Ende einer aus mehreren Antennenelementen bestehenden Spalte oder Gruppe erwünscht ist, um die Entstehung von Nebenkeulen zu unterdrücken.

Fig. 4 zeigt schließlich eine Ausführungsform, bei der die Zuleitung 12 durch eine Leitung 20 gebildet wird, die keinen direkten Kontakt zur Speiseleitung 14 hat, sondern mit dieser lediglich kapazitiv gekoppelt ist.

Auch für das reflektierende Ende 15 der in Fig. 1 gezeigten Speiseleitung 14 sind unterschiedliche Gestaltungen denkbar. Statt eines offenen Endes (Open-Stub) kann auch ein geschlossenes Ende 15a verwendet werden, wie in Fig. 5 gezeigt ist. In diesem Fall ist das Ende der Speiseleitung 14 durch einen sogenannten Via 22 zur Masse der Leiterplatte kurzgeschlossen (Short-Stub).

Eine weitere Möglichkeit zeigt Fig. 6. Hier wird das reflektierende Ende der Speiseleitung 14 durch ein komplexen Abschlusselement 15b gebildet, das einen einstellbaren Teil der Leistung an reflektiert.

## Patentansprüche

1. Gruppenantenne für Radarsensoren, mit einer Speiseleitung (14), die mit einem Ende an einen Oszillator angeschlossen ist, mehreren Antennenelementen (10), die jeweils über eine Zuleitung (12) mit der Speiseleitung verbunden sind, und mit Schaltungselementen (16, 18, 20) zur Leistungsaufteilung auf die Antennenelemente (10), wobei die Schaltungselemente (16, 18, 20) zur Leistungsaufteilung ausschließlich in den von der Speiseleitung abzweigenden Zuleitungen (12) angeordnet sind, die Speiseleitung (14) am dem Oszillator entgegengesetzten Ende (15) reflektierend ausgebildet ist und die Abstände zwischen den Abzweigungen der Zuleitungen (12) und der Abstand zwischen der letzten dieser Abzweigungen und dem reflektierenden Ende (15) der Speiseleitung (14) so gewählt sind, dass die am reflektierenden Ende reflektierte Welle bei der Überlagerung mit der hinlaufenden Welle eine stehende Welle bildet, **dadurch gekennzeichnet, dass** deren Schwingungsbäuche sich jeweils an den Abzweigungsstellen der Zuleitungen befinden, und dass mindestens eines der Schaltungselemente zur Leistungsaufteilung durch eine Zuleitung (12) in der Form einer Streifenleitung (20) gebildet wird, die nur kapazitiv an die Speiseleitung (14) gekoppelt ist.

2. Gruppenantenne nach Anspruch 1, bei der mindestens einige der Schaltungselemente zur Leistungsaufteilung Transformatoren (16) sind.

3. Gruppenantenne nach Anspruch 2, bei der bei mindestens einem Antennenelement der Transformator (16) an dem Ende einer Zuleitung (12) gebildet ist, das an die Speiseleitung (14) angrenzt.

4. Gruppenantenne nach Anspruch 2 oder 3, bei der bei mindestens einem Antennenelement der Transformator (16) an dem Ende der Zuleitung (12) angeordnet ist, das an das Antennenelement (10) angrenzt.

5. Gruppenantenne nach einem der vorstehenden Ansprüche, bei der mindestens eines der Schaltungselemente zur Leistungsaufteilung durch eine Zuleitung (12) in der Form eines Mikrostreifens (18) mit verringerter Breite gebildet wird.

6. Gruppenantenne nach einem der vorstehenden Ansprüche, bei dem das reflektierende Ende der Speiseleitung (14) ein offenes Ende (15) ist.

7. Gruppenantenne nach einem der Ansprüche 1 bis 5, bei dem das reflektierende Ende der Speiseleitung (14) ein geschlossenes Ende (15a) ist.

8. Gruppenantenne nach einem der Ansprüche 1 bis 8, bei dem das reflektierende Ende der Speiseleitung (14) durch ein Abschlusselement (15b) gebildet wird.

## Claims

1. Antenna array for radar sensors, comprising a feed line (14) which is connected by way of one end to an oscillator, a plurality of antenna elements (10) which are each connected by means of a supply line (12) to the feed line, and comprising circuit elements (16, 18, 20) for distributing power to the antenna elements (10), wherein the circuit elements (16, 18, 20) for distributing power are arranged exclusively in the supply lines (12) which branch off from the feed line, the feed line (14) is of reflective design at that end (15) which is opposite the oscillator, and the distances between the branches of the supply lines (12) and the distance between the last of these branches and the reflective end (15) of the feed line (14) are selected such that the wave which is reflected at the reflective end forms a standing wave when it is superimposed by the incident wave, **characterized in that** the oscillation antinodes of the said standing wave are each located at the branch points of the supply lines, and **in that** at least one of the circuit elements for distributing power is formed by a supply line (12) in the form of a strip line (20) which is coupled only capacitively to the feed line (14).

2. Antenna array according to Claim 1, in which at least some of the circuit elements for distributing power are transformers (16).

3. Antenna array according to Claim 2, in which, in the case of at least one antenna element, the transformer (16) is formed at that end of a supply line (12) which adjoins the feed line (14).

4. Antenna array according to Claim 2 or 3, in which, in the case of at least one antenna element, the transformer (16) is arranged at that end of the supply line (12) which adjoins the antenna element (10).

5. Antenna array according to one of the preceding claims, in which at least one of the circuit elements for distributing power is formed by a supply line (12) in the form of a microstrip (18) of reduced width.

6. Antenna array according to one of the preceding claims, in which the reflective end of the feed line (14) is an open end (15).

7. Antenna array according to one of Claims 1 to 5, in which the reflective end of the feed line (14) is a closed end (15a).

8. Antenna array according to one of Claims 1 to 8, in which the reflective end of the feed line (14) is formed by a termination element (15b).

## Revendications

1. Antenne en réseau pour capteurs radar, comprenant une ligne d'alimentation (14) qui est raccordée à un oscillateur par une extrémité, plusieurs éléments d'antenne (10) qui sont respectivement reliés à la ligne d'alimentation par le biais d'une ligne d'arrivée (12), et comprenant des éléments de commutation (16, 18, 20) destinés à distribuer la puissance sur les éléments d'antenne (10), les éléments de commutation (16, 18, 20) destinés à distribuer la puissance étant exclusivement disposés dans les lignes d'arrivée (12) qui sont dérivées de la ligne d'arrivée, la ligne d'alimentation (14) étant configurée réfléchissante à l'extrémité (15) opposée à l'oscillateur et les écarts entre les dérivations des lignes d'arrivée (12) et l'écart entre la dernière de ces dérivations et l'extrémité (15) réfléchissante de la ligne d'alimentation (14) étant choisi de telle sorte que l'onde réfléchie au niveau de l'extrémité réfléchissante, lorsqu'elle est superposée à l'onde arrivante, forme une onde stationnaire, **caractérisée en ce que** ses ventres d'oscillation se trouvent respectivement au niveau des points de dérivation des lignes d'arrivée, et **en ce qu'**au moins l'un des éléments de commutation destinés à distribuer la puissance est formé par une ligne d'arrivée (12) sous la forme d'un guide d'onde à ruban (20) qui est seulement couplé de manière capacitive à la ligne d'alimentation (14).

2. Antenne en réseau selon la revendication 1, avec laquelle au moins quelques-uns des éléments de commutation destinés à distribuer la puissance sont des transformateurs (16).

3. Antenne en réseau selon la revendication 2, avec laquelle, pour au moins un élément d'antenne, le transformateur (16) est formé à l'extrémité d'une ligne d'arrivée (12) qui est contigüe à la ligne d'alimentation (14).

4. Antenne en réseau selon la revendication 2 ou 3, avec laquelle, pour au moins un élément d'antenne, le transformateur (16) est disposé à l'extrémité de la ligne d'arrivée (12) qui est contigüe à l'élément d'antenne (10).

5. Antenne en réseau selon l'une des revendications précédentes, avec laquelle au moins l'un des éléments de commutation destinés à distribuer la puissance est formé par une ligne d'arrivée (12) sous la forme d'un microruban (18) ayant une largeur réduite.

6. Antenne en réseau selon l'une des revendications précédentes, avec laquelle l'extrémité réfléchissante de la ligne d'alimentation (14) est une extrémité ouverte (15).

7. Antenne en réseau selon l'une des revendications 1 à 5, avec laquelle l'extrémité réfléchissante de la ligne d'alimentation (14) est une extrémité fermée (15a).

8. Antenne en réseau selon l'une des revendications 1 à 8, avec laquelle l'extrémité réfléchissante de la ligne d'alimentation (14) est formée par un élément de terminaison (15b).
